# EUROPEAN PATENT APPLICATION

(11) **EP 4 510 254 A1**
(43) Date of publication of application: **19.02.2025**
(21) Application number: 22958502.1
(22) Date of filing: 16.09.2022
(51) Int. Cl.: H01M 10/04, H01M 10/05, H01M 50/533, H01M 50/15

(54) **BATTERY CELL, BATTERY, AND ELECTRIC DEVICE**

(71) Applicant: Contemporary Amperex Technology Co., Limited, Ningde, Fujian 352100 (CN)
(72) Inventor: ZHOU, Wenlin, Ningde, Fujian 352100 (CN); XU, Liangfan, Ningde, Fujian 352100 (CN); ZHANG, Qianqian, Ningde, Fujian 352100 (CN); LI, Quankun, Ningde, Fujian 352100 (CN); WANG, Peng, Ningde, Fujian 352100 (CN)
(74) Representative: Ran, Handong
(86) International application number: PCT/CN2022/119423
(87) International publication number: WO 2024/055312

(57) **Abstract**

The present application relates to the field of batteries, and provides a battery cell, a battery, and an electric device. The battery cell comprises a housing, an electrode assembly, an end cover assembly, and a supporting member. The housing is provided with an opening. The electrode assembly is provided with a main body portion and a tab protruding out of the main body portion, and the electrode assembly is accommodated in the housing. The end cover assembly covers the opening. The supporting member is located in the housing, and the tab is bent around the supporting member. The supporting member is connected to the end cover assembly to fix the supporting member. The supporting member is arranged in the battery cell, the tab is bent around the supporting member, and in the scene of inverting the battery cell, the supporting member can support the main body portion, so that the gravity of the main body portion is not easily transmitted to the tab, and tab bifurcation and insertion are not prone to being caused, thereby improving the safety of the battery cell. In addition, the supporting member is connected to the end cover assembly, so that the supporting member cannot move up and down in the housing, and the tab bent around the supporting member cannot be driven to move, thereby facilitating keeping the form of the tab, and preventing the tab from being damaged when being driven.

## Description

### Technical Field

The present application relates to the field of batteries, and in particular, to a battery cell, a battery and an electric device.

### Background Art

Batteries are widely used in the field of new energy, for example, electric vehicles, new energy vehicles, etc. New energy vehicles and electric vehicles have become a new trend in the development of the automobile industry. For the development of battery technology, many design factors need to be considered at the same time, for example, performance parameters such as energy density, cycle life, discharge capacity, and charge-discharge rate. In addition, battery safety also needs to be considered. However, in the scenario where cells are inverted, the safety of the battery cells is poor.

### Summary

Objectives of embodiments of the present application are to provide a battery cell, a battery and an electric device, which aim to alleviate the problem in the related art that the safety of battery cells is poor in the scenario where cells are inverted.

In one aspect, embodiments of the present application provides a battery cell, including a casing, an electrode assembly, an end cover assembly and a support member, where the casing has an opening, the electrode assembly has a main body and tabs protruding from the main body, the electrode assembly is accommodated in the casing; the end cover assembly covers the opening; the support member is located in the casing, and the tabs are bent around the support member, wherein the support member is connected to the end cover assembly to fix the support member.

In the above technical solution, the battery cell is provided therein with the support member, and the tabs are bent around the support member, such that in the scenario where cells are inverted, the support member can support the main body, enabling that the gravity of the main body is not easy to be transferred to the tabs, which is not easy to cause tab bifurcating and insertion and improves the safety of the battery cell. In addition, the support member is connected to the end cover assembly, so that the support member does not move up and down in the casing and does not drive the tabs bent around the support member to move, which is conducive to maintaining the shapes of the tabs and preventing damage of the tabs when being driven to move.

As an optional technical solution of embodiments of the present application, the support member is detachably connected to the end cover assembly.

In the above technical solution, the support member is detachably connected to the end cover assembly, which facilitates the maintenance of the battery cell and the recycling of the support member after the battery cell is scrapped.

As an optional technical solution of embodiments of the present application, the end cover assembly includes at least one first hook part, the support member includes at least one second hook part, and the at least one first hook part and the at least one second hook part are correspondingly arranged and are hooked with each other to limit the movement of the support member in a direction close to the main body.

In the above technical solution, by providing the at least one first hook part and the at least one second hook part, the end cover assembly is enabled to be hooked with the support member, enabling relatively simple and convenient connection, and limiting the movement of the support member in the direction close to the main body, i.e., limiting the movement of the tabs bent around the support member in a direction close to the main body, and thereby preventing the tabs from being inserted into the main body to cause a short circuit.

As an optional technical solution of embodiments of the present application, the support member abuts against the end cover assembly in a direction away from the main body.

In the above technical solution, by making the support member abut against the end cover assembly in a direction away from the main body, the movement of the support member in a direction away from the main body is limited, ensuring that the support member can stably support the main body, and enabling that the gravity of the main body is not easy to be transferred to the tabs, and thus is not easy to cause tab bifurcating and insertion.

As an optional technical solution of embodiments of the present application, the support member further includes a body part, and the tabs are bent around the body part; the second hook part includes an extension part and a stopper part, where in the thickness direction of the end cover assembly, the extension part extends from the body part in a direction away from the electrode assembly, the stopper part is connected to an end of the extension part away from the electrode assembly, and the stopper part is configured to be hooked with the first hook part.

In the above technical solution, the extension part extends from the body part in a direction away from the electrode assembly, the stopper part is connected to an end of the extension part away from the electrode assembly, and the extension part can be deformed when being hooked with the first hook part, thereby allowing the first hook part to extend into between the stopper part and the body part, so that the stopper part is hooked with the first hook part. The stopper part can abut against the first hook part to limit the movement of the support member in a direction close to the main body.

As an optional technical solution of embodiments of the present application, in the first direction, the size of the portion of the stopper part protruding from the extension part is L1, which satisfies: L1>0.6mm, where the first direction is perpendicular to the thickness direction.

In the above technical solution, by making the size of the portion of the stopper part protruding from the extension part exceed 0.6 mm, the stopper part has enough area to abut against the first hook part, thereby improving the stability of the hook cooperation between the first hook part and the second hook part. When L≤0.6mm, the area of the stopper part abutting against the first hook part is small, so when the support member is subjected to an external force toward the main body, the stopper part is easily separated from the first hook part, thereby making the support member disengaged from the end cover assembly.

As an optional technical solution of embodiments of the present application, the body part is provided with at least one through hole; in the thickness direction, the projection of the stopper part on the body part at least partially falls within the at least one through hole; or the stopper part protrudes from the extension part in the first direction, the at least one through hole is located on one side of the extension part in the second direction, and any two of the first direction, the second direction and the thickness direction are perpendicular to each other.

In the above technical solution, by providing the at least one through hole, the strength of the body part near the second hook part is weakened, which is conducive to the deformation of the body part when the first hook part is hooked with the second hook part, thereby facilitating the hook cooperation between the first hook part and the second hook part. In addition, the arrangement of the at least one through hole can also reduce stress concentration and optimize the stress received by the support member. When the projection of the stopper part on the body part at least partially falls within the at least one through hole, the at least one through hole can also be formed by injection molding, while forming the stopper part, and demoulding is convenient.

As an optional technical solution of embodiments of the present application, a first inclined surface is formed at an end of the first hook part facing the main body, a second inclined surface is formed at an end of the stopper part away from the main body, and in the thickness direction, the projection of the first inclined surface on the main body and the projection of the second inclined surface on the main body at least partially overlap.

In the above technical solution, by providing the first inclined surface and the second inclined surface, when the first hook part is hooked with the second hook part, the first inclined surface abuts against the second inclined surface, and the stopper part moves along the first inclined surface, relative to the first hook part. Under the abutting action of the first inclined surface, the extension part is gradually deformed, then the second inclined surface is separated from the first inclined surface, and after the stopper part moves for a certain distance in the direction away from the electrode assembly, the deformation of the extension part is restored, the stopper part abuts against the first hook part, and the first hook part is hooked with the second hook part. By providing the first inclined surface and the second inclined surface, the first inclined surface and the second inclined surface cooperate with each other to play a guiding role to guide the second hook part to be hooked with the first hook part, enabling easier hook cooperation between the second hook part and the first hook part.

As an optional technical solution of embodiments of the present application, the body part has a first surface, the extension part is connected to the first surface, and the stopper part has a second surface configured for abutting against the first hook part, where the second surface faces the first surface in the thickness direction, and the distance between the second surface and the first surface is L2, which satisfies L2>1.5mm.

In the above technical solution, by making the distance between the second surface and the first surface in the thickness direction greater than 1.5mm, the extension part is enabled to have a sufficient length to facilitate the extension part deforming when the first hook part is hooked with the second hook part, thus enabling easier hook cooperation between the first hook part and the second hook part. If L2 ≤ 1.5 mm, the extension part is not easy to be deformed, making it difficult for the second hook part to snap into the first hook part.

As an optional technical solution of embodiments of the present application, in the first direction, the body part has a first end and a second end opposite to each other, and each of the first end and the second end is provided with the corresponding second hook part, where the first direction is perpendicular to the thickness direction.

In the above technical solution, each of the first end and the second end of the body part is provided with the corresponding second hook part, and correspondingly, the end cover assembly is provided with corresponding first hook parts, and the second hook parts at multiple positions are hooked with the first hook parts, facilitating improving the stability of the support member being connected to the end cover assembly, and thereby ensuring that the support member is not easily separated from the end cover assembly, so that the support member does not move up and down in the casing, which is conductive to maintaining the shapes of the tabs and avoid damage of the tabs when being driven to move.

As an optional technical solution of embodiments of the present application, in the second direction, the first end is provided with a plurality of the second hook parts at intervals, and the second end is provided with a plurality of the second hook parts at intervals, where the distance between two adjacent second hook parts located at the first end is D1, and the distance between two adjacent second hook parts located at the second end is D2, satisfying: D1>D2; and any two of the first direction, the second direction and the thickness direction are perpendicular to each other.

In the above technical solution, by making the distance between the two adjacent second hook parts located at the first end greater than the distance between the two adjacent second hook parts located at the second end, fool-proofing function can be realized when installing the support member, preventing the support member from being installed incorrectly.

As an optional technical solution of embodiments of the present application, it satisfies: D1-D2>2mm.

In the above technical solution, by making the difference between the distance between the two adjacent second hook parts located at the first end and the distance between the two adjacent second hook parts located at the second end greater than 2mm, the fool-proofing function is improved. If D1-D2≤2mm, when the support member is forcibly installed incorrectly, the support member or the end cover assembly can be deformed, so that the installation is successful even when it is forcibly installed incorrectly.

As an optional technical solution of embodiments of the present application, the second hook part located at the first end and the second hook part located at the second end are provided back to back or facing each other.

In the above technical solution, in the case where the second hook part located at the first end and the second hook part located at the second end are provided back to back, when the support member is assembled to the end cover assembly, the first hook part located at the first end and the second hook part located at the second end are deformed in opposite directions, and are not easy to be separated from the end cover assembly after installation. In the case where the second hook part located at the first end and the second hook part located at the second end are provided facing each other, when the support member is assembled to the end cover assembly, the first hook part located at the first end and the second hook part located at the second end are deformed in directions facing each other, and are not easy to be separated from the end cover assembly after installation.

As an optional technical solution of embodiments of the present application, the support member is thermally melted or laser welded with the end cover assembly.

In the above technical solution, by making the support member thermally melted or laser welded with the end cover assembly, the connection strength between the support member and the end cover assembly is high, enabling that the support member is not easy to be separated from the end cover assembly.

As an optional technical solution of embodiments of the present application, the end cover assembly includes an end cover and an insulating member, where the insulating member is located at one side of the end cover facing the main body, the insulating member is configured for insulating and isolating the electrode assembly from the end cover, and the support member is connected to the insulating member.

In the above technical solution, by connecting the support member to the insulating member, there is no need to change the existing manufacturing method of the end cover, which is beneficial to reducing production costs, because compared with the end cover, the insulating member is cheaper and easier to manufacture. In addition, connecting the support member to the insulating member is less likely to cause new problems (such as sealing and insulation problems of the end cover) than connecting the support member to the end cover.

As an optional technical solution of embodiments of the present application, the end cover is provided with a pressure relief mechanism, and the insulating member is provided, at a position thereof corresponding to the pressure relief mechanism, with a protrusion portion protruding in a direction facing the electrode assembly, the support member is provided with a groove, and the protrusion portion is at least partially accommodated in the groove.

In the above technical solution, by providing the protrusion portion and the groove and making the protrusion portion accommodated in the groove, the protrusion portion cooperates with the groove to limit the support member so as to prevent the support member from moving in the casing.

As an optional technical solution of embodiments of the present application, the protrusion portion abuts against the groove bottom surface of the groove in the thickness direction of the end cover assembly.

In the above technical solution, by making the protrusion portion abut against the groove bottom surface of the groove, the movement of the support member in a direction away from the main body is limited, ensuring that the support member can stably support the main body, and enabling that the gravity of the main body is not easy to be transferred to the tabs, and thus is not easy to cause tab bifurcating and insertion.

As an optional technical solution of embodiments of the present application, in the thickness direction of the end cover assembly, the depth of the groove is H, which satisfies: H>0.5mm.

In the above technical solution, by making the depth of the groove greater than 0.5mm, the groove and the protrusion portion have sufficient cooperation depth, thereby improving the limiting effect on the support member, so that even if it is subjected to a certain degree of external impact, the protrusion portion is not made to be disengaged from the groove.

As an optional technical solution of embodiments of the present application, the maximum gap between the groove side surface of the groove and the outer peripheral surface of the protrusion portion is D3, which satisfies: 0<D3≤10mm.

In the above technical solution, by making the maximum gap between the groove side surface of the groove and the outer peripheral surface of the protrusion portion greater than 0 and less than 10 mm, an assembly margin is left to facilitate the assembling of the protrusion portion and the groove.

As an optional technical solution of embodiments of the present application, the end cover assembly includes a pressure relief mechanism, and in the thickness direction of the end cover assembly, a plurality of gas discharging holes are provided in a region of the support member corresponding to the pressure relief mechanism.

In the above technical solution, the support member is provided with a plurality of gas discharging holes, allowing the gas inside the battery cell to flow to the pressure relief mechanism through the gas discharging holes, and facilitating pressure relief of the pressure relief mechanism when the pressure in the battery cell reaches a bursting pressure.

As an optional technical solution of embodiments of the present application, the area of the plurality of gas discharging holes is S1, and the area of the pressure relief mechanism is S2, satisfying S1/S2≥0.5.

In the above technical solution, the area of the plurality of gas discharging holes is made to be greater than or equal to half of the area of the pressure relief mechanism, enabling the gas in the battery cell to flow smoothly to the pressure relief mechanism through the gas discharging holes, facilitating quick pressure relief when the pressure in the battery cell reaches a bursting pressure.

As an optional technical solution of embodiments of the present application, in the thickness direction of the end cover assembly, the plurality of gas discharging holes are evenly distributed within the projection range of the pressure relief mechanism on the support member.

In the above technical solution, the plurality of gas discharging holes are evenly distributed within the projection range of the pressure relief mechanism on the support member in the thickness direction, which is conducive to the smooth flowing of gas in the battery cell to the pressure relief mechanism through the gas discharging holes.

As an optional technical solution of embodiments of the present application, the end cover assembly is provided with a first liquid injection hole, the support member is provided with a second liquid injection hole, and the second liquid injection hole is corresponding to the first liquid injection hole in position.

In the above technical solution, the first liquid injection hole and the second liquid injection hole are provided, facilitating the liquid injection.

As an optional technical solution of embodiments of the present application, the second liquid injection hole is provided deviating from the center position of the support member.

In the above technical solution, the second liquid injection hole is provided deviating from the center position of the support member, such that when the support member is installed to the end cover assembly, the second liquid injection hole can play a fool-proofing role, which reduces the risk of incorrect installation to a certain extent.

In a second aspect, embodiments of the present application provide a battery, including a box body and at least one battery cell mentioned above, where the at least one battery cell is accommodated in the box body.

As an optional technical solution of embodiments of the present application, the end cover assembly is provided at one side of the battery cell close to the bottom wall of the box body.

In the above technical solution, by making the end cover assembly provided at one side of the battery cell close to the bottom wall of the box body, the battery cell is inverted in the box body.

In a third aspect, embodiments of the present application provide an electric device, including at least one battery mentioned above, where the at least one battery is configured to provide electrical energy.

### Brief Description of Drawings

In order to more clearly illustrate the technical solutions of the embodiments of the present application, the drawings that are required to be used in the embodiments will be briefly introduced below. It should be understood that the following drawings only show some embodiments of the present application, and thus should not be regarded as a limitation on the scope, and those skilled in the art can also obtain other related drawings based on these drawings without paying creative work.
FIG. 1 is a schematic structural view of a vehicle provided in some embodiments of the present application;
FIG. 2 is an exploded view of a battery provided in some embodiments of the present application;
FIG. 3 is an exploded view of a battery cell provided in some embodiments of the present application;
FIG. 4 is a schematic structural view of a battery cell provided in some embodiments of the present application;
FIG. 5 is a schematic top view of a battery cell provided in some embodiments of the present application;
FIG. 6 is a sectional view of position A-A in FIG. 5;
FIG. 7 is an enlarged view of position B in FIG. 6;
FIG. 8 is an enlarged view of position C in FIG. 6;
FIG. 9 is a schematic structural view of a support member provided in some embodiments of the present application;
FIG. 10 is an enlarged view of position E in FIG. 9;
FIG. 11 is a schematic structural view of a support member provided in some other embodiments of the present application;
FIG. 12 is an enlarged view of position F in FIG. 11;
FIG. 13 is a schematic top view of a support member provided in some embodiments of the present application;
FIG. 14 is a sectional view of position G-G in FIG. 13;
FIG. 15 is a schematic structural view of a support member provided in yet some embodiments of the present application;
FIG. 16 is an enlarged view of position H in FIG. 15;
FIG. 17 is an enlarged view of position I in FIG. 15;
FIG. 18 is a schematic top view of a support member provided in still some embodiments of the present application;
FIG. 19 is a sectional view of position J-J in FIG. 18;
FIG. 20 is a schematic top view of an end cover assembly and a support member provided in yet some embodiments of the present application;
FIG. 21 is a sectional view of position K-K in FIG. 20;
FIG. 22 is an enlarged view of position L in FIG. 21; and
FIG. 23 is an enlarged view of position D in FIG. 6.

Reference signs:10-box body; 11-first part; 12-second part; 20-battery cell; 21-end cover assembly; 211-end cover; 212-pressure relief mechanism; 213-electrode terminal; 214-first liquid injection hole; 215-insulating member; 2151-first hook part; 21511-first inclined surface; 2152-connection surface; 2153-protrusion portion; 22-electrode assembly; 221-main body; 222-tab; 23-casing; 24-support member; 240-first end; 241-second hook part; 2411-extension part; 2412-stopper part; 24121-second inclined surface; 24122-second surface; 242-body part; 2421-first surface; 243-abutting portion; 244-through hole; 245-reinforcement part; 246-groove; 247-gas discharging hole; 248-second liquid injection hole; 249-second end; 25-adapter; 100-battery; 200-controller; 300-motor; 1000-vehicle.

### Detailed Description of Embodiments

In order to make the purposes, technical solutions and advantages of the embodiments of the present application clearer, the technical solutions in the embodiments of the present application will be clearly described below in conjunction with the drawings in the embodiments of the present application. Obviously, the described embodiments are some, but not all of embodiments of the present application. Based on the embodiments in the present application, all other embodiments obtained by persons of ordinary skill in the art without paying creative efforts fall within the protection scope of the present application.

Unless otherwise defined, all technical and scientific terms used in the present application have the same meaning as commonly understood by those skilled in the technical field of the present application. The terms used in the description of the present application are only for the purpose of describing embodiments, and are not intended to limit the present application. Terms "comprising" and "having" and any variations thereof in the specification and claims of the present application and the above description of the drawings are intended to cover a non-exclusive inclusion. The terms "first", "second" and the like in the description and claims of the present application or the above drawings are used to distinguish different objects, rather than to describe a specific sequence or primary-subordinate relationship.

Reference made in the present application to "embodiment" means that a particular feature, structure, or characteristic described in connection with the embodiment may be included in at least one embodiment of the present application. The phases occurring in various places in the specification do not necessarily all refer to the same embodiment, nor separate or alternative embodiments mutually exclusive of other embodiments.

In the description of this application, it should be noted that, unless otherwise clearly specified and defined, the terms "installation", "link", "connection" and "attachment" should be understood in a broad sense. For example, it may be fixed connection, it may also be detachable connection or integral connection; it may be direct connection or indirect connection through an intermediary, or it may be internal communication between two components. Those of ordinary skill in the art may understand the specific meanings of the above terms in the present application according to specific situations.

The term "and/or" in the present application indicates only an association relationship describing associated objects, meaning that there may be three kinds of relationships. For example, A and/or B may indicate three situations: there is only A, there are both A and B, and there is only B. In addition, the character "/" in the present application generally indicates that the associated objects therebefore and thereafter have an "or" relationship.

In the embodiments of the present application, the same reference signs represent the same components, and for the sake of brevity, in different embodiments, detailed descriptions of the same components are omitted. It should be understood that the thickness, length, width and other dimensions of the various components in the embodiments of the present application shown in the drawings, as well as the overall thickness, length, width and other dimensions of the integrated device, are for illustrative purposes only, and should not constitute any limitation to the present application.

The term "multiple/a plurality of" appearing in the present application refers to more than two (including two).

In the present application, the battery cell may include lithium ion secondary battery cell, lithium ion primary battery cell, lithium sulfur battery cell, sodium lithium ion battery cell, sodium ion battery cell or magnesium ion battery cell, etc., which is not limited in the embodiments of the present application. The battery cell may be in a shape of cylinder, flat body, cuboid or in other shape, which is not limited in the embodiments of the present application. Battery cells are generally divided into three types according to packaging methods: cylindrical battery cells, square battery cells and pouch battery cells, which are not limited in the embodiments of the present application.

The battery mentioned in embodiments of the present application refers to a single physical module that includes one or more battery cells to provide higher voltage and capacity. For example, the battery mentioned in the present application may include a battery module or a battery pack, and the like. The battery generally includes a box body for packaging one or more battery cells. The box body may prevent a liquid or other foreign object from affecting the charging or discharging of the battery cells.

The battery cell includes an electrode assembly and an electrolytic solution, the electrode assembly being composed of a positive electrode plate, a negative electrode plate and a separator. The battery cell works mainly by moving metal ions between the positive electrode plate and negative electrode plate. The positive electrode plate includes a positive current collector and a positive electrode active material layer. The positive electrode active material layer is coated on the surface of the positive current collector, the positive current collector not coated with the positive electrode active material layer protrudes from the positive current collector coated with the positive electrode active material layer, and the positive current collector not coated with the positive electrode active material layer is used as the positive sub-tab. Taking a lithium-ion battery as an example, the material of the positive current collector may be aluminum, and the positive electrode active material may be lithium cobaltate, lithium iron phosphate, ternary lithium, or lithium manganate, etc. The negative electrode plate includes a negative current collector and a negative electrode active material layer. The negative electrode active material layer is coated on the surface of the negative current collector, the negative current collector not coated with the negative electrode active material layer protrudes from the negative current collector coated with the negative electrode active material layer, and the negative current collector not coated with the negative electrode active material layer is used as the negative sub-tab. The material of the negative current collector may be copper, and the negative electrode active material may be carbon or silicon, etc. In order to ensure that a large current passes without fusing, the number of positive sub-tabs is multiple and the positive sub-tabs are stacked together, and the number of negative sub-tabs is multiple and the negative sub-tabs are stacked together. The material of the separator may be PP (polypropylene) or PE (polyethylene), etc. In addition, the electrode assembly may be in a winding structure or may be in a laminated/stacked structure, which is not limited in the embodiments of the present application.

At present, from the perspective of the development of the market situation, the application of batteries is becoming more and more extensive. The batteries are not only used in energy storage power source systems such as hydraulic, thermal, wind and solar power plants, but also widely used in electric means of transport such as electric bicycles, electric motorcycles, electric vehicles, as well as fields of military equipment and aerospace, etc. With the continuous expansion of battery application fields, its market demand is also constantly increasing.

For the development of battery technology, many design factors need to be considered at the same time, for example, performance parameters such as energy density, cycle life, discharge capacity, and charge-discharge rate. In addition, battery safety also needs to be considered. However, in the scenario where cells are inverted, the safety of the battery cells is poor.

The inventors found through further researches that the battery cell includes an electrode assembly, which is a component where electrochemical reactions occur, in the battery cell. The electrode assembly is mainly formed by winding or stacking the positive electrode plate and the negative electrode plate, and a separator is generally provided between the positive electrode plate and the negative electrode plate. The parts having the active material of the positive electrode plate and the negative electrode plate constitute the main body of the electrode assembly, the parts having no active material of the positive electrode plate and the negative electrode plate respectively form sub-tabs, and in order to ensure that large current passes without fusing, the number of the sub-tabs is multiple and the sub-tabs are stacked together to form the tab. In the scenario where cells are inverted, the tabs are located below the main body, and the tabs may be affected by the gravity of the main body. Since the tab is formed by stacking multiple sub-tabs, it is prone to bifurcate when affected by the gravity, and the bifurcated part is easy to be inserted into the main body to come into contact with the positive electrode plate or negative electrode plate in the main body, causing a short circuit and causing fire or even explosion in severe cases, resulting in poor safety of the battery cell.

In view of this, embodiments of the present application provides a battery cell, where the battery cell is provided therein with the support member, and the tabs are bent around the support member, such that in the scenario where cells are inverted, the support member can support the main body, enabling that the gravity of the main body is not easy to be transferred to the tabs, and thus is not easy to cause tab bifurcating and insertion (the tabs bifurcate and are inserted into the main body) and improving the safety of the battery cell. In addition, the support member is connected to the end cover assembly, so that the support member does not move up and down in the casing and does not drive the tabs bent around the support member to move, which is conducive to maintaining the shapes of the tabs and preventing damage of the tabs when being driven to move.

The technical solutions described in the embodiments of the present application are applicable to the battery and the electric device using the battery.

The electric device may be vehicle, mobile phone, portable device, laptop, ship, spacecraft, electric toy and electric tool, etc. The spacecraft includes airplane, rocket, space shuttle and space ship, etc. The electric toy includes fixed or mobile electric toy, for example, game console, electric car toy, electric ship toy and electric airplane toy, etc. The electric tool includes metal cutting electric tool, grinding electric tool, assembly electric tool and railway electric tool, for example, electric drill, electric grinder, electric wrench, electric screwdriver, electric hammer, impact electric drill, concrete vibrator and electric planer, etc. The embodiments of the present application do not specifically limit the above electric device.

In the following embodiments, for convenience of description, description is made by taking, as an example, an electric device being a vehicle 1000.

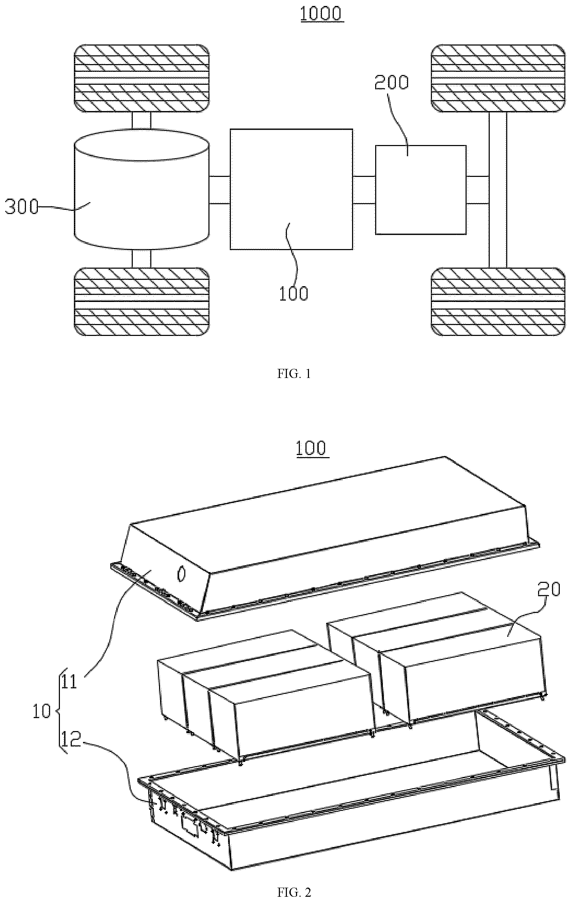

Referring to FIG. 1, FIG. 1 is a schematic structural view of a vehicle 1000 provided in some embodiments of the present application. The vehicle 1000 may be a fuel vehicle, a gas vehicle or a new energy vehicle, and the new energy vehicle may be a pure electric vehicle, a hybrid power vehicle or an extended-range vehicle, etc. A battery 100 is provided inside the vehicle 1000, and the battery 100 may be provided at the bottom, head or tail of the vehicle 1000. The battery 100 may be used for supplying power to the vehicle 1000. For example, the battery 100 may be used as an operating power source of the vehicle 1000. The vehicle 1000 may further include a controller 200 and a motor 300, the controller 200 being used to control the battery 100 to supply power to the motor 300, for example, for working power requirements during starting, navigating and running of the vehicle 1000.

In some embodiments of the present application, the battery 100 can not only be used as an operating power source for the vehicle 1000, but also be used as a driving power source for the vehicle 1000 to replace or partially replace fuel oil or natural gas to provide driving power for the vehicle 1000.

Referring to FIG. 2, FIG. 2 is an exploded view of a battery 100 provided in some embodiments of the present application. The battery 100 include a box body 10 and battery cells 20, and the battery cells 20 are accommodated in the box body 10. In the above, the box body 10 is used for providing an accommodation space for the battery cells 20, and the box body 10 may be in various structures. In some embodiments, the box body 10 may include a first part 11 and a second part 12, the first part 11 and the second part 12 cover each other, and the first part 11 and the second part 12 together define an accommodation space for accommodating the battery cells 20. The second part 12 may be in a hollow structure with one end open, and the first part 11 may be in a plate-shaped structure. The first part 11 covers the open side of the second part 12 so that the first part 11 and the second part 12 together define an accommodation space. The first part 11 and the second part 12 may also both be in a hollow structure with one side open, and the open side of the first part 11 covers the open side of the second part 12. Of course, the box body 10 formed by the first part 11 and the second part 12 may be in various shapes, such as a cylinder, a cuboid and so on.

In the battery 100, there may be multiple battery cells 20, the multiple battery cells 20 may be in serial, parallel or hybrid connection with each other. The hybrid connection means that the multiple battery cells 20 are connected with each other both in series and in parallel. The multiple battery cells 20 may be in serial, parallel or hybrid connection with each other, and then the whole composed of the multiple battery cells 20 is accommodated in the box body 10. Certainly, the battery 100 may be formed in the way that the multiple battery cells 20 are first in serial or in parallel or in hybrid connection with each other to form battery modules, and then the multiple battery modules are in serial or in parallel or in hybrid connection with each other to form a whole, and accommodated in the box body 10. The battery 100 may also include other structures, for example, the battery 100 may further include a bus component for realizing the electrical connection between the multiple battery cells 20.

In the above, each battery cell 20 may be a secondary battery cell or a primary battery cell; it may also be a lithium-sulfur battery cell, a sodium-ion battery cell or a magnesium-ion battery cell, but is not limited thereto. The battery cell 20 may be in a shape of cylinder, flat body, cuboid or in other shape, etc.

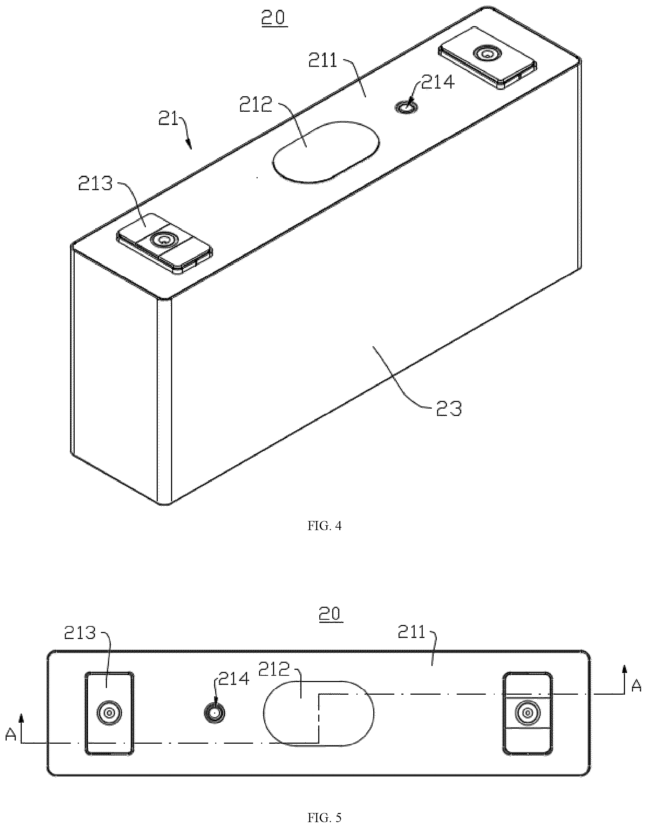

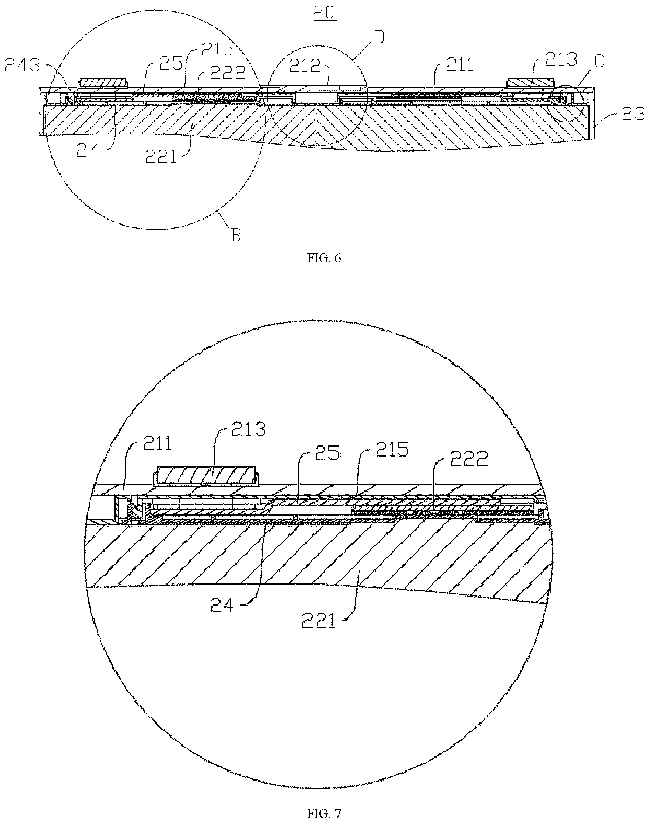

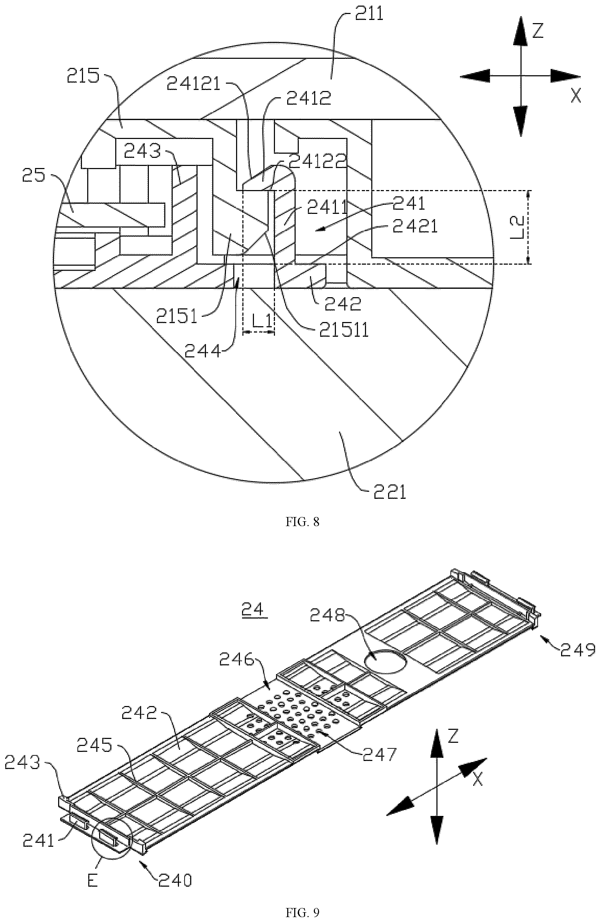

Referring to FIG. 3, FIG. 4, FIG. 5, FIG. 6, FIG. 7 and FIG. 8, FIG. 3 is an exploded view of a battery cell 20 provided in some embodiments of the present application. FIG. 4 is a schematic structural view of a battery cell 20 provided in some embodiments of the present application. FIG. 5 is a schematic top view of a battery cell 20 provided in some embodiments of the present application. FIG. 6 is a sectional view of position A-A in FIG. 5. FIG. 7 is an enlarged view of position B in FIG. 6. FIG. 8 is an enlarged view of position C in FIG. 6. Embodiments of the present application provides a battery cell 20, where the battery cell 20 includes a casing 23, an electrode assembly 22, an end cover assembly 21 and a support member 24. The casing 23 has an opening. The electrode assembly 22 has a main body 221 and tabs 222 protruding from the main body 221. The electrode assembly 22 is accommodated in the casing 23, and the end cover assembly 21 covers the opening. The support member 24 is located in the casing 23, and the tabs 222 are bent around the support member 24. In the above, the support member 24 is connected to the end cover assembly 21, to fix the support member 24.

The end cover assembly 21 includes an end cover 211, and the end cover 211 refers to a component that covers the opening of the casing 23 to isolate the internal environment of the battery cell 20 from the external environment. Without limitation, the shape of end cover 211 may be adapted to the shape of the casing 23 to match the casing 23. Optionally, the end cover 211 may be made of a material with certain hardness and strength (such as aluminum alloy), so that the end cover 211 is not easy to be deformed when being pressed and collided, enabling that the battery cell 20 has higher structural strength and also improved safety performance. The material of the end cover 211 may also be various, such as copper, iron, aluminum, stainless steel, aluminum alloy, plastic, etc., which is not specially limited in this embodiment of the present application. Optionally, the end cover assembly 21 further includes an electrode terminal 213, with the electrode terminal 213 disposed on the end cover 211. The electrode terminal 213 may be used to be electrically connected with the electrode assembly 22 to output or input the electric energy of the battery cell 20. Optionally, the end cover assembly 21 further includes a pressure relief mechanism 212. The pressure relief mechanism 212 is provided on the end cover 211. The pressure relief mechanism 212 is used to be opened when the internal pressure or temperature of the battery cell 20 reaches the bursting pressure to release the internal pressure of the battery cell 20. In some embodiments, the end cover assembly 21 further includes an insulating member 215, the insulating member 215 is provided at the inner side of the end cover 211, and the insulating member 215 may be used to isolate the electrical connection components in the casing 23 from the end cover 211 to reduce the risk of short circuit. Exemplarily, the insulating member 215 may be plastic, rubber or the like.

The casing 23 is a component for cooperating with the end cover 211 to form internal environment of the battery cell 20, wherein the formed internal environment may be used to accommodate the electrode assembly 22, electrolytic solution and other components. The casing 23 and the end cover 211 may be independent components, and the casing 23 may be provided with an opening, wherein the internal environment of the battery cell 20 may be formed by making the end cover 211 cover the opening at the opening. Without limitation, the end cover 211 and the casing 23 may also be integral. Specifically, the end cover 211 and the casing 23 may form a common joint surface before other components enter the casing, and when needing to package the inside of the casing 23, the end cover 211 is made to cover the casing 23. The casing 23 may be in various shapes and various sizes, such as cuboid, cylinder, hexagonal prism and so on. Specifically, the shape of the casing 23 may be determined according to the specific shape and size of the electrode assembly 22. The casing 23 may be made of various materials, such as copper, iron, aluminum, stainless steel, aluminum alloy, plastic, etc., which is not specially limited in this embodiment of the present application.

The electrode assembly 22 is a component where electrochemical reactions occur, in the battery cell 20. The casing 23 may contain one or more electrode assemblies 22 therein. The electrode assembly 22 is mainly formed by winding or stacking the positive electrode plate and the negative electrode plate, and a separator is generally provided between the positive electrode plate and the negative electrode plate. The parts having the active material of the positive electrode plate and the negative electrode plate constitute the main body of the electrode assembly 22, and the parts having no active material of the positive electrode plate and the negative electrode plate respectively form sub-tabs. In order to ensure that a large current passes without fusing, the number of the sub-tabs is multiple and the sub-tabs are stacked together to form the tabs 222. The positive electrode tab and the negative electrode tab may be located at one end of the main body 221 together or at two ends of the main body 221 respectively. During the charge and discharge processes of the battery 100, the positive electrode active material and the negative electrode active material react with the electrolytic solution, and the tabs 222 are connected to the electrode terminals 213 to form a current loop. The tabs 222 protrude from the main body 221 so as to be connected with the electrode terminals 213 to output electric energy from the battery cell 20 or to input electric energy into the battery cell 20.

The support member 24 is located in the casing 23 and on a side of the main body 221 facing the end cover assembly 21. In the scenario where cells are inverted, the support member 24 can support the main body 221 so that the gravity of the main body 221 is not easy to be transferred to the tabs 222.

"The tabs 222 are bent around the support member 24" refers to that the tabs 222 bend at the edge of the support member 24, starting from one side of the support member 24 facing the main body 221, and extends to one side of the support member 24 away from the main body 221 Referring to FIGS. 6 and 7, in some embodiments, the battery cell 20 includes adapters 25. The adapter 25 connects the portion of the tab 222 located on the side of the support member 24 away from the main body 221 to the electrode terminal 213, so as to make the tab 222 electrically connected with the electrode terminal 213.

It should be noted that in the embodiments of the present application, that the tabs 222 are bent around the support member 24 may refer to that the positive electrode tab is bent around the support member 24, that the negative electrode tab is bent around the support member 24, or also that both the positive electrode tab and the negative electrode tab are bent around the support member 24. In the case where the tabs 222 are bent around the support member 24, the tabs may be in contact, or not in contact with the end of the support member 24.

"The support member 24 is connected to the end cover assembly 21 to fix the support member 24" refers to that the support member 24 is connected with the end cover assembly 21, so as to limit the movement of the support member 24. The support member 24 cannot move or rotate relative to the end cover assembly 21, that is, the relative positions of the support member 24 and the end cover assembly 21 are fixed. It should be noted that the support member 24 may be fixedly connected, for example, welded, to the end cover assembly 21. However, it is not limited to the fixed connection between the support member 24 and the end cover assembly 21. The connection manner between the support member 24 and the end cover 211 only needs to ensure that the relative positions of the support member 24 and the end cover assembly 21 are fixed when the battery cell 20 is in use.

The battery cell 20 is provided therein with the support member 24, and the tabs 222 are bent around the support member 24, so that in the scenario where cells are inverted, the support member 24 can support the main body 221, enabling that the gravity of the main body 221 is not easy to be transferred to the tabs 222, and thus is not easy to cause tab 222 bifurcating and insertion, and improving the safety of the battery cell 20. In addition, the support member 24 is connected to the end cover assembly 21, so that the support member 24 does not move up and down in the casing 23 and does not drive the tabs 222 bent around the support member 24 to move, which is conducive to maintaining the shapes of the tabs 222 and preventing damage of the tabs 222 when being driven to move.

In some embodiments, the support member 24 is detachably connected to the end cover assembly 21.

The detachable connection means that after the support member 24 is connected to the end cover assembly 21, the relative positions of them are fixed and are not separated, during normal operation. In addition, the support member 24 may be separated from the end cover assembly 21 by certain means as needed. For example, the support member 24 may be threadedly connected to the end cover assembly 21. For another example, the support member 24 may be engaged/snap-fitted with the end cover assembly 21.

The support member 24 is detachably connected to the end cover assembly 21, which facilitates the maintenance of the battery cell 20 and the recycling of the support member 24 after the battery cell 20 is scrapped.

Referring to FIGS. 6 and 8, in some embodiments, the end cover assembly 21 includes first hook parts 2151, and the support member 24 includes second hook parts 241. The first hook parts 2151 and the second hook parts 241 are provided correspondingly and hooked with each other to restrict the movement of the support member 24 in a direction close to the main body 221.

At least one of the first hook part 2151 and the second hook part 241 is formed as a hook-like structure. When the first hook part 2151 is in hook cooperation with the second hook part 241, the first hook part 2151 and the second hook part 241 are hooked together, so that the support member 24 cannot move in the direction close to the main body 221.

Here, that the first hook parts 2151 and the second hook parts 241 are provided correspondingly means that one first hook part 2151 is at least corresponding to one second hook part 241, and the position of the second hook part 241 is matched with that of the first hook part 241, so that when installing the support member 24, the second hook part 241 may be hooked to the first hook part 2151.

By providing the first hook part 2151 and the second hook part 241, the end cover assembly 21 is enabled to be hooked with the support member 24, enabling relatively simple and convenient connection, and limiting the movement of the support member 24 in the direction close to the main body 221, i.e., limiting the movement of the tabs 222 bent around the support member 24, in a direction close to the main body 221, and thereby preventing the tabs 222 from being inserted into the main body 221 to cause a short circuit.

In some embodiments, the support member 24 abuts against the end cover assembly 21 in the direction away from the main body 221.

Referring to FIGS. 6 and 8, an abutting portion 243 is provided protruding from one side of the support member 24 away from the main body 221, and when the first hook part 2151 is hooked with the second hook part 241, the abutting portion 243 abuts against the end cover assembly 21. The abutting portion 243 may extend along the edge of the support member 24 to form a larger abutting area for abutting against the end cover assembly 21.

By making the support member 24 abut against the end cover assembly 21 in a direction away from the main body 221, the movement of the support member 24 in the direction away from the main body 221 is limited, ensuring that the support member 24 can stably support the main body 221, so that the gravity of the main body 221 is not easy to be transferred to the tabs, and thus is not easy to cause tab 222 bifurcating and insertion. The first hook part 2151 is hooked with the second hook part 241, limiting the movement of the support member 24 in a direction close to the main body 221, and the support member 24 abuts against the end cover assembly 21 in a direction away from the main body 221, thereby limiting the movement of the support member 24 in a direction away from the main body 221. The support member 24 can neither move toward the main body 221, nor move away from the main body 221, so that the support member 24 cannot move up and down in the casing 23, and cannot drive the tabs 222 bent around the support member 24 to move, which is conducive to maintaining the shapes of the tabs 222 and preventing damage of the tabs 222 when being driven to move.

Referring to FIG. 8, in some embodiments, the support member 24 further includes a body part 242, and the tabs 222 are bent around the body part 242. The second hook part 241 includes an extension part 2411 and a stopper part 2412. In the thickness direction of the end cover assembly 21, the extension part 2411 extends from the body part 242 in a direction away from the electrode assembly 22. The stopper part 2412 is connected to one end of the extension part 2411 away from the electrode assembly 22, and the stopper part 2412 is used to be hooked with the first hook part 2151.

The thickness direction of the end cover assembly 21 is same as the thickness direction of the end cover 211. Referring to FIG. 8, the thickness direction is the z direction shown in FIG. 8.

The body part 242 is the main part of the support member 24. The body part 242 is used for being wound by the tabs 222, and supporting the body part 221 in the scenario where cells are inverted. Optionally, in order to make the body part 242 have better strength, a reinforcement part 245 is provided on the body part 242. The reinforcement part 245 may be reinforcement rib or strengthening rib provided protruding from the body part 242.

The extension part 2411 is a portion of the second hook part 241 that connects the stopper part 2412 and the body part 242. The extension part 2411 extends from the body part 242 in a direction away from the electrode assembly 22, and the stopper part 2412 and the body part 242 are located respectively at two ends of the extension part 2411. A space configured for allowing the first hook part 2151 to extend thereinto is formed between the stopper part 2412 and the body part 242. When the first hook part 2151 is hooked with the second hook part 241, the extension part 2411 may be deformed to allow the first hook part 2151 to extend into the above-mentioned space. After the first hook part 2151 extends into the above-mentioned space, the deformation of the extension part 2411 is restored, so that the first hook part 2151 is not easy to be separated from the second hook part 241.

The stopper part 2412 and the extension part 2411 are formed as hook-like structures. When the first hook part 2151 is hooked with the second hook part 241, the stopper part 2412 may abut against the first hook part 2151, so that the support member 24 cannot move in the direction close to the main body 221.

The extension part 2411 extends from the body part 242 in a direction away from the electrode assembly 22, and the stopper part 2412 is connected to one end of the extension part 2411 away from the electrode assembly 22. The extension part 2411 can be deformed when being hooked with the first hook part 2151, so as to allow the first hook part 2151 to extend into between the stopper part 2412 and the body part 242, so that the stopper part 2412 is hooked with the first hooking part 2151. The stopper part 2412 can abut against the first hook part 2151 to limit the movement of the support member 24 in a direction close to the main body 221.

Referring to FIG. 8, in some embodiments, in the first direction, the size of the portion of the stopper part 2412 protruding from the extension part 2411 is L1, which satisfies: L1>0.6 mm. The first direction is perpendicular to the thickness direction.

The first direction is the direction in which the stopper part 2412 protrudes from the extension part 2411, and the first direction is also the direction perpendicular to the thickness direction. Referring to FIG. 8, the first direction may be the X direction shown in FIG. 8.

L1 represents the size of the portion of the stopper part 2412 protruding from the extension part 2411 in the first direction, i.e., the distance between the surface of the stopper part 2412 away from the extension part 2411 and the surface of the stopper part 2412 facing the extension part 2411 in the first direction. In the first direction, the value of the size of the portion of the stopper part 2412 protruding from the extension part 2411 may be L1=0.7mm, 0.8mm, 0.9mm, 1mm, 1.2mm, 1.5mm, etc.

By making the size of the portion of the stopper part 2412 protruding from the extension part 2411 exceed 0.6 mm, the stopper part 2412 has enough area to abut against the first hook part 2151, thereby improving the stability of the hook cooperation between the first hook part 2151 and the second hook part 241. When L≤0.6mm, the area of the stopper part 2412 abutting against the first hook part 2151 is small, so when the support member 24 is subjected to an external force toward the main body 221, the stopper part 2412 is ease to be separated from the first hook part 2151, thereby making the support member 24 disengaged from the end cover assembly 21.

In some embodiments, the body part 242 is provided with a through hole 244. In the thickness direction, the projection of the stopper part 2412 on the body part 242 at least partially falls within the through hole 244. Or the stopper part 2412 protrudes from the extension part 2411 in the first direction, and the through hole 244 is located at one side of the extension part 2411 in the second direction. Any two of the first direction, the second direction and the thickness direction are perpendicular to each other.

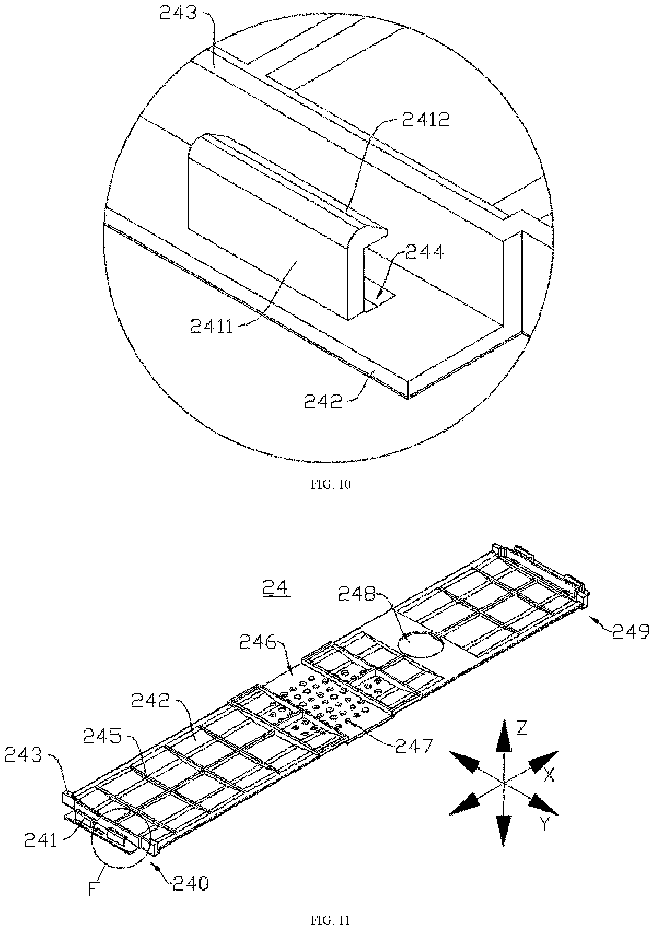

Referring to FIG. 9 and FIG. 10, FIG. 9 is a schematic structural view of a support member 24 provided in some embodiments of the present application. FIG. 10 is an enlarged view of position E in FIG. 9. In some embodiments, in the thickness direction, the projection of the stopper part 2412 on the body part 242 at least partially falls within the through hole 244. "In the thickness direction, the projection of the stopper part 2412 on the body part 242 at least partially falls within the through hole 244" includes that the projection of the stopper part 2412 on the body part 242 in the thickness direction completely falls within the through hole 244, and the projection of the stopper part 2412 on the body part 242 in the thickness direction partially falls within the through hole 244.

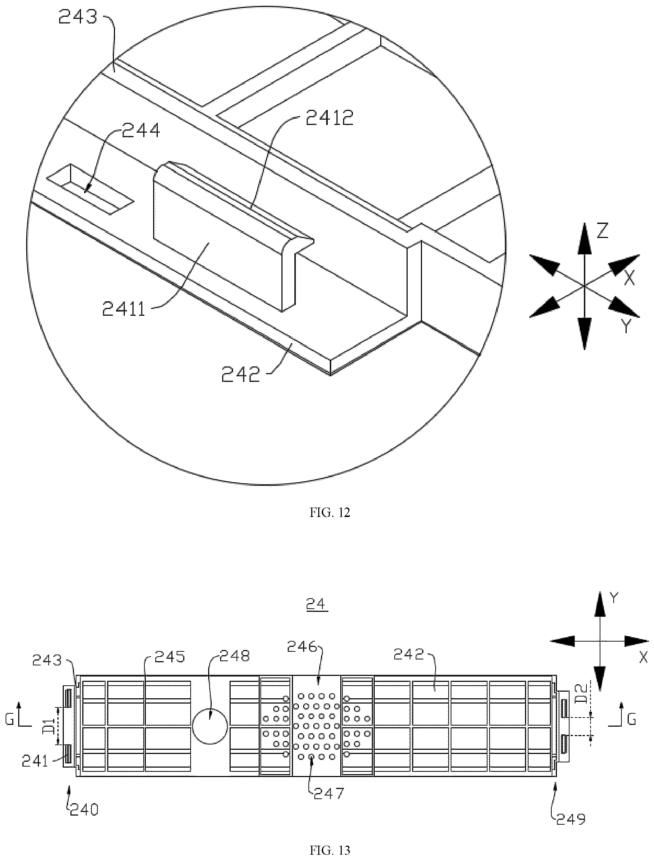

Referring to FIG. 11 and FIG. 12, FIG. 11 is a schematic structural view of a support member 24 provided in some other embodiments of the present application. FIG. 12 is an enlarged view of position F in FIG. 11. In some other embodiments, the through hole 244 is located at one side of the extension part 2411 in the second direction. There may be one or more through holes 244. Multiple through holes 244 may be located at one side of the extension part 2411 in the second direction, or the multiple through holes 244 may be located at two sides of the extension part 2411 in the second direction.

By providing the through hole 244, the strength of the body part 242 near the second hook part 241 is weakened, which is conducive to the deformation of the body part 242 when the first hook part 2151 is hooked with the second hook part 241, thereby facilitating making the first hook part 2151 be hooked with the second hooking part 241. In addition, the arrangement of the through hole 244 can also reduce stress concentration and optimize the stress received by the support member 24. When the projection of the stopper part 2412 on the body part 242 at least partially falls within the through hole 244, the through hole 244 can also be formed by injection molding, while forming the stopper part 2412, and demoulding is convenient.

Referring to FIG. 8 again, in some embodiments, a first inclined surface 21511 is formed at an end of the first hook part 2151 facing the main body 221, and a second inclined surface 24121 is formed at an end of the stopper part 2412 away from the main body 242. In the thickness direction, the projection of the first inclined surface 21511 on the main body 221 at least partially overlap with the projection of the second inclined surface 24121 on the main body 221.

The first inclined surface 21511 is formed at an end of the first hook part 2151 facing the main body 221, that is, the first inclined surface 21511 is formed at an end of the first hook part 2151 facing the body part 242. In the first direction, the first inclined surface 21511 is located at one side of the first hook part 2151 close to the second hook part 241.

The second inclined surface 24121 is formed at an end of the second hook part 241 away from the main body 221, that is, the second inclined surface 24121 is formed at an end of the first hook part 2151 away from the body part 242. In the first direction, the second inclined surface 24121 is located at one side of the second hook part 241 close to the first hook part 2151.

It should be noted that the inclination degrees of the first inclined surface 21511 and the second inclined surface 24121 may be the same or different.

By providing the first inclined surface 21511 and the second inclined surface 24121, when the first hook part 2151 and the second hook part 242 are hooked together, the first inclined surface 21511 abuts against the second inclined surface 24121, and the stopper part 2412 moves along the first inclined surface 21511, relative to the first hook part 2151. Under the abutting action of the first inclined surface 21511, the extension part 2411 gradually deforms. Then the second inclined surface 24121 is separated from the first inclined surface 21511. After the stopper part 2412 moves for a certain distance in the direction away from the electrode assembly 22, the deformation of the extension part 2411 is restored, the stopper part 2412 abuts against the first hook part 2151, and the first hook part 2151 and the second hook part 241 are hooked together. By providing the first inclined surface 21511 and the second inclined surface 24121, the first inclined surface 21511 and the second inclined surface 24121 cooperate with each other to play a guiding role to guide the second hook part 241 to be hooked with the first hook part 2151, enabling easier hook cooperation between the second hook part 241 and the first hook part 2151.

Referring to FIG. 8, in some embodiments, the body part 242 has a first surface 2421, and the extension part 2411 is connected to the first surface 2421. The stopper part 2412 has a second surface 24122 for abutting against the first hook part 2151. In the thickness direction, the second surface 24122 faces the first surface 2421. The distance between the second surface 24122 and the first surface 2421 is L2, which satisfies L2>1.5mm.

The first surface 2421 is the surface of the body part 242 on which the extension part 2411 is provided. When the body part 242 is in a plate-shaped structure, the first surface 2421 is the surface of the body part 242 away from the main body 221.

The second surface 24122 is the surface of the stopper part 2412 for abutting against the first hook part 2151, and at the same time, the second surface 24122 is also opposite to the first surface 2421 in the thickness direction.

L2 represents the distance between the first surface 2421 and the second surface 24122 in the thickness direction. When the body part 242 is in a plate-shaped structure, L2 may also be the spacing between the stopper part 2412 and the body part 242. In the thickness direction, the distance between the first surface 2421 and the second surface 24122 may be: L2=1.6mm, 1.7mm, 1.8mm, 1.9mm, 2mm, etc.

By making the distance between the first surface 2421 and the second surface 24122 in the thickness direction greater than 1.5mm, the extension part 2411 is enabled to have a sufficient length to facilitate the extension part 2411 deforming when the first hook part 2151 is hooked with the second hook part 241, thus enabling easier hook cooperation between the first hook part 2151 and the second hook part 241. If L2 ≤ 1.5 mm, the extension part 2411 is not easily deformed, making it difficult for the second hook part 241 to snap into the first hook part 2151.

Referring to FIG. 13, FIG. 13 is a schematic top view of a support member 24 provided in some embodiments of the present application. In some embodiments, the body part 242 has a first end 240 and a second end 249 opposite to each other, in the first direction. Each of the first end 240 and the second end 249 is provided with the second hook part 241. The first direction is perpendicular to the thickness direction.

The first end 240 and the second end 249 are respectively two ends of the body part 242 in the first direction. The support member 24 includes a plurality of second hook part 241, and the plurality of second hook parts 241 are respectively provided at the first end 240 and the second end 249. In conjunction with FIG. 13, the first direction may be a left-right direction, the first end 240 is the end of the body part 242 located at the left side, and the second end 249 is the end of the body part 242 located at the right side. Each of the first end 240 and the second end 249 is provided with the second hook parts 241.

Each of the first end 240 and the second end 249 of the body part 242 is provided with the second hook parts 241, and correspondingly, the end cover assembly 21 is correspondingly provided with first hook parts 2151, and the second hook parts 241 at multiple positions are hooked with the first hook parts 2151, facilitating improving the stability of the support member 24 being connected to the end cover assembly 21, and thereby ensuring that the support member 24 is not easily separated from the end cover assembly 21, so that the support member 24 does not move up and down in the casing 23, which is helpful to maintain the shapes of the tabs and avoid damage of the tabs when being driven to move.

Referring to FIG. 13, in some embodiments, in the second direction, the first end 240 is provided with a plurality of second hook parts 241 at intervals. The second end 249 is provided with multiple second hook parts 241 at intervals. The distance between two adjacent second hook parts 241 located at the first end 240 is D1, and the distance between two adjacent second hook parts 241 located at the second end 249 is D2, which satisfies: D1>D2. Any two of the first direction, the second direction and the thickness direction are perpendicular to each other.

The first end 240 is provided with a plurality of second hook parts 241 arranged in the second direction. Correspondingly, the end cover assembly 21 is also provided with a plurality of first hook parts 2151 at positions close to the first end 240, so that the plurality of second hook parts 241 on the first end 240 can be hooked with the plurality of first hook parts 2151 at positions on the end cover assembly 21 close to the first end 240.

The second end 249 is provided with a plurality of second hook parts 241 arranged in the second direction. Correspondingly, the end cover assembly 21 is also provided with a plurality of first hook parts 2151 at positions close to the second end 249, so that the plurality of second hook parts 241 on the second end 249 can be hooked with the plurality of first hook parts 2151 at positions on the end cover assembly 21 close to the second end 249.

D1 indicates the distance between two adjacent second hook parts 241 in the plurality of second hook parts 241 located at the first end 240. D2 indicates the distance between two adjacent second hook parts 241 in the plurality of second hook parts 241 located at the second end 249. D1>D2 indicates that the distance between the two adjacent second hook parts 241 located at the first end 240 is greater than the distance between the two adjacent second hook parts 241 located at the second end 249.

By making the distance between the two adjacent second hook parts 241 located at the first end 240 greater than the distance between the two adjacent second hook parts 241 located at the second end 249, fool-proofing function can be realized when installing the support member 24, preventing the support member 24 from being installed incorrectly.

In some embodiments, it satisfies: D1-D2>2mm.

"D1-D2>2mm" indicates that the difference between the distance between two adjacent second hook parts 241 located at the first end 240 and the distance between two adjacent second hook parts 241 located at the second end 249 is greater than 2mm. The difference between the distance between two adjacent second hook parts 241 located at the first end 240 and the distance between two adjacent second hook parts 241 located at the second end 249 may be: D1-D2=2.1mm, 2.4mm, 2.8mm, 3mm, etc.

By making the difference between the distance between the two adjacent second hook parts 241 located at the first end 240 and the distance between the two adjacent second hook parts 241 located at the second end 249 greater than 2mm, the fool-proofing function is improved. If D1-D2≤2mm, when the support member 24 is forcibly installed incorrectly, the support member 24 or the end cover assembly 21 may be deformed, so that the installation is successful even when it is forcibly installed incorrectly.

In some embodiments, the second hook part 241 located at the first end 240 and the second hook part 241 located at the second end 249 are provided back to back or facing each other.

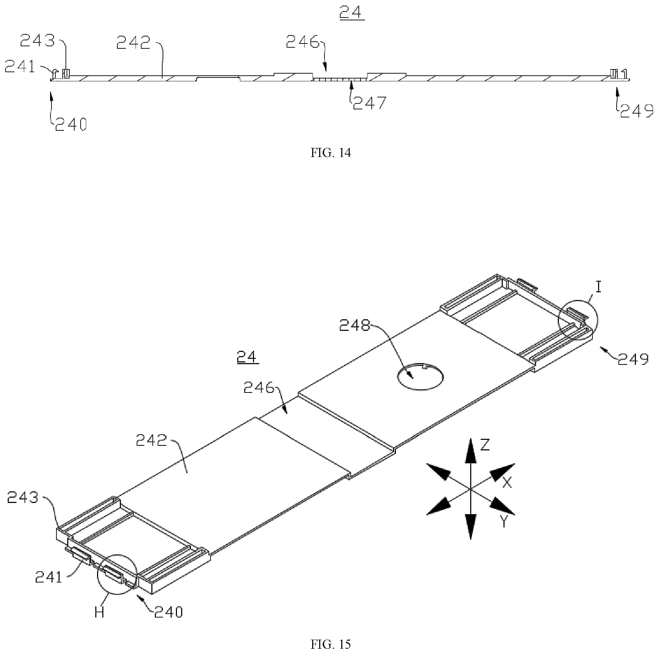

Referring to FIG. 13 and FIG. 14, FIG. 14 is a sectional view of position G-G in FIG. 13. In some embodiments, the stopper part 2412 of the second hook part 241 located at the first end 240 protrudes from the extension part 2411 in the first direction, toward the middle of the support member 24. The stopper part 2412 of the second hook part 241 located at the second end 249 protrudes from the extension part 2411 in the first direction, toward the middle of the support member 24. The stopper part 2412 of the second hook part 241 located at the first end 240 and the stopper part 2412 of the second hook part 241 located at the second end 249 both protrude out from the extension part 2411 in the first direction, toward the middle of the support member 24, that is, the second hook part 241 located at the first end 240 and the second hook part 241 located at the second end 249 are disposed facing each other.

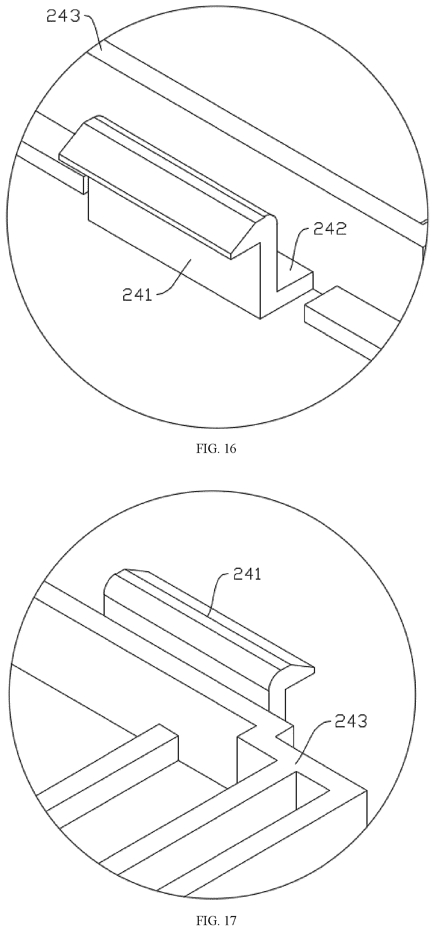

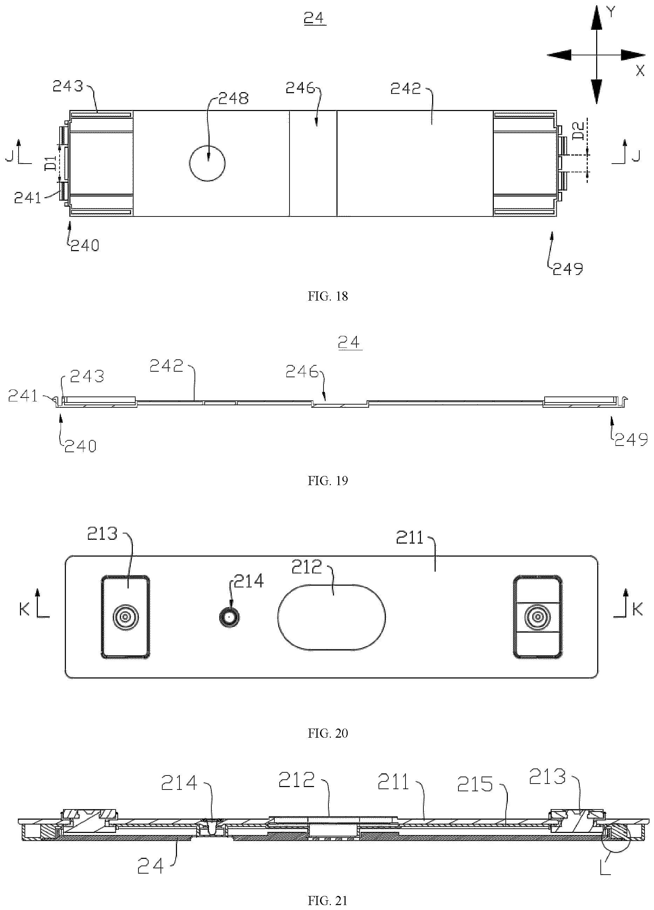

Referring to FIG. 15, FIG. 16, FIG. 17, FIG. 18, and FIG. 19, FIG. 15 is a schematic structural view of a support member 24 provided in yet some embodiments of the present application. FIG. 16 is an enlarged view of position H in FIG. 15. FIG. 17 is an enlarged view of position I in FIG. 15. FIG. 18 is a schematic top view of a support member 24 provided in still some embodiments of the present application. FIG. 19 is a sectional view of position J-J in FIG. 18. In yet some embodiments, the stopper part 2412 of the second hook part 241 located at the first end 240 protrudes from the extension part 2411 in the first direction, away from the middle of the support member 24. The stopper part 2412 of the second hook part 241 located at the second end 249 protrudes from the extension part 2411 in the first direction, away from the middle of the support member 24. The stopper part 2412 of the second hook part 241 located at the first end 240 and the stopper part 2412 of the second hook part 241 located at the second end 249 both protrude from the extension part 2411 in the first direction, away from the middle of the support member 24, that is, the second hook part 241 located at the first end 240 and the second hook part 241 located at the second end 249 are disposed back to back.

When the second hook part 241 located at the first end 240 and the second hook part 241 located at the second end 249 are provided back to back, the support member 24 is assembled to the end cover assembly 21, then the first hook part 2151 located at the first end 240 and the second hook part 241 located at the second end 249 deform in opposite directions, and are not easy to be separated from the end cover assembly 21 after installation. When the second hook part 241 located at the first end 240 and the second hook part 241 located at the second end 249 are provided facing each other, the support member 24 is assembled to the end cover assembly 21, then the first hook part 2151 located at the first end 240 and the second hook part 241 located at the second end 249 deform in directions facing each other, and are not easy to be separated from the end cover assembly 21 after installation.

In some other embodiments, the support member 24 is thermally melted or laser welded with the end cover assembly 21.

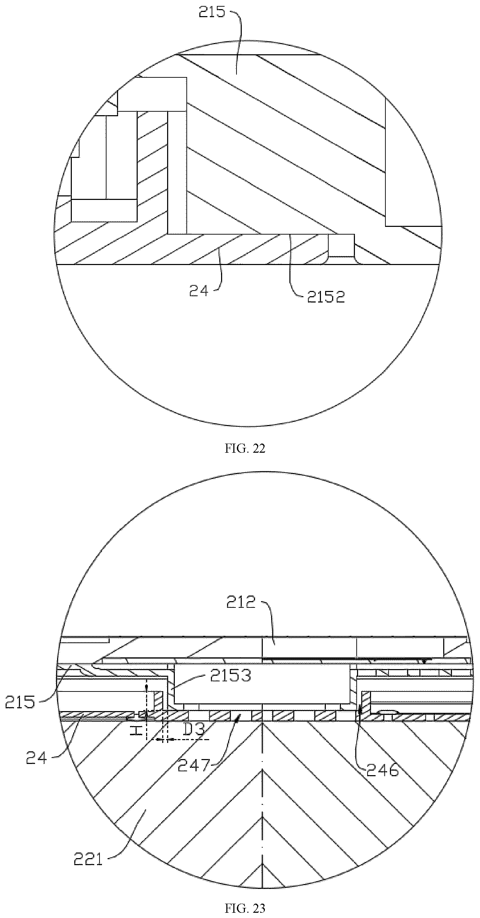

Referring to FIG. 20, FIG. 21 and FIG. 22, FIG. 20 is a schematic top view of an end cover assembly 21 and a support member 24 provided in yet some embodiments of the present application. FIG. 21 is a sectional view of position K-K in FIG. 20. FIG. 22 is an enlarged view of position L in FIG. 21. FIG. 22 shows the connection surface 2152 of the support member 24 and the end cover assembly 21 connected by thermal melting or laser welding.

By making the support member 24 thermally melted or laser welded with the end cover assembly 21, the connection strength between the support member 24 and the end cover assembly 21 is high, enabling that the support member 24 is not easily separated from the end cover assembly 21.

In some embodiments, the end cover assembly 21 includes an end cover 211 and an insulating member 215. The insulating member 215 is located at one side of the end cover 211 facing the main body 221. The insulating member 215 is used to insulate and isolate the electrode assembly 22 from the end cover 211. The support member 24 is connected to the insulating member 215.

By connecting the support member 24 to the insulating member 215, there is no need to change the existing manufacturing method of the end cover 211, which is beneficial to reducing production costs, because compared with the end cover 211, the insulating member 215 is cheaper and easier to manufacture. In addition, connecting the support member 24 to the insulating member 215 is less likely to cause new problems (such as sealing and insulation problems of the end cover 211) than connecting the support member 24 to the end cover 211.

In some other embodiments, the support member 24 is connected to the end cover 211. Connecting the support member 24 to the end cover 211 can also make the support member 24 fixed, so that the support member 24 can support the body part 242 in the scenario where cells are inverted.

Referring to FIG. 23, FIG. 23 is an enlarged view of position D in FIG. 6. In some embodiments, the end cover 211 is provided with a pressure relief mechanism 212. The insulating member 215 is provided, at a position thereof corresponding to the pressure relief mechanism 212, with a protrusion portion 2153 protruding in a direction facing the electrode assembly 22, the support member 24 is provided with a groove 246. The protrusion portion 2153 is at least partially accommodated in the groove 246.

The protrusion portion 2153 is a protruding structure on the insulating member 215. The protrusion portion 2153 protrudes in a direction facing the electrode assembly 22. The position of the protrusion portion 2153 is corresponding to the position of the pressure relief mechanism 212. The protrusion portion 2153 may be partially accommodated in the groove 246, or may be completely accommodated in the groove 246.

By providing the protrusion portion 2153 and the groove 246 and making the protrusion portion 2153 accommodated in the groove 246, the protrusion portion 2153 cooperates with the groove 246 to limit the support member 24 so as to prevent the support member 24 from moving in the casing 23.

Referring to FIG. 23, in some embodiments, in the thickness direction of the end cover assembly 21, the protrusion portion 2153 abuts against the groove bottom surface of the groove 246.

"In the thickness direction of the end cover assembly 21, the protrusion portion 2153 abuts against the groove bottom surface of the groove 246" may also mean that the end surface of the protrusion portion 2153 away from the end cover 211 abuts against the groove bottom surface of the groove 246.

By making the protrusion portion 2153 abut against the groove bottom surface of the groove 246, the movement of the support member 24 in a direction away from the main body 221 is limited, ensuring that the support member 24 can stably support the main body 221, and enabling that the gravity of the main body 221 is not easy to be transferred to the tabs 222, and thus is not easy to cause tab 222 bifurcating and insertion.

In some embodiments, in the thickness direction of the end cover assembly 21, the depth of the groove 246 is H, which satisfies: H>0.5mm.

H represents the depth of the groove 246, and the value of the depth of the groove 246 may be: H=0.6mm, 0.7mm, 0.8mm, 0.9mm, 1mm, etc.

By making the depth of the groove 246 greater than 0.5mm, the groove 246 and the protrusion portion 2153 have sufficient cooperation depth, thereby improving the limiting effect on the support member 24, so that even if it is subjected to a certain degree of external impact, the protrusion portion 2153 is not made to be disengaged from the groove 246.

In some embodiments, the maximum gap between the groove side surface of the groove 246 and outer peripheral surface of the protrusion portion 2153 is D3, which satisfies: 0<D3≤10mm.

The gap between the groove side surface of the groove 246 and the outer peripheral surface of the protrusion portion 2153 may vary. For example, in some positions, the groove side surface of the groove 246 fits the outer peripheral surface of the protrusion portion 2153, while in other positions, there is a relatively large gap between the groove side surface of the groove 246 and the outer peripheral surface of the protrusion portion 2153. Certainly, the gap existing between the groove side surface of the groove 246 and the outer peripheral surface of the protrusion portion 2153 may also be the same at each position. The maximum gap between the groove side surface of the groove 246 and the outer peripheral surface of the protrusion portion 2153 represents the gap depth at a position where the gap between the groove side surface of the groove 246 and the outer peripheral surface of the protrusion portion 2153 is largest. The value of the maximum gap between the groove side surface of the groove 246 and the outer peripheral surface of the protrusion portion 2153 may be: D3=1mm, 2mm, 3mm, 4mm, 5mm, 6mm, 7mm, 8mm, 9mm, 10mm, etc.

By making the maximum gap between the groove side surface of the groove 246 and the outer peripheral surface of the protrusion portion 2153 greater than 0 and less than 10 mm, an assembly margin is left to facilitate the assembling of the protrusion portion 2153 and the groove 246.

Referring to FIG. 9, FIG. 11 and FIG. 23, in some embodiments, the end cover assembly 21 includes a pressure relief mechanism 212. In the thickness direction of the end cover assembly 21, a plurality of gas discharging holes 247 are provided in a region of the support member 24 corresponding to the pressure relief mechanism 212.

The gas discharging holes 247 are through holes provided in the support member 24, and the positions of the gas discharging holes 247 are corresponding to the position of the pressure relief mechanism 212. The gas discharging holes 247 can allow gas to flow from the side of the support member 24 facing the main body 221 to the side of the support member 24 away from the main body 221.

By providing the plurality of gas discharging holes 247 in the support member 24, the gas inside the battery cell 20 is allowed to flow to the pressure relief mechanism 212 through the gas discharging holes 247, so that when the pressure inside the battery cell 20 reaches the bursting pressure, the pressure can be released through the pressure relief mechanism 212.

In some embodiments, the area of the plurality of gas discharging holes 247 is S1, and the area of the pressure relief mechanism 212 is S2, satisfying S1/S2≥0.5.

S1 is the sum of the areas of the plurality of gas discharging holes 247. S2 is the area of the pressure relief mechanism 212. The ratio of the area of the plurality of gas discharging holes 247 to the area of the pressure relief mechanism 212 may be: S1/S2=0.5, 0.6, 0.7, 0.8, etc.

The area of the plurality of gas discharging holes 247 is made to be greater than or equal to half of the area of the pressure relief mechanism 212, enabling the gas in the battery cell 20 to flow smoothly to the pressure relief mechanism 212 through the gas discharging holes 247, facilitating quick pressure relief when the pressure in the battery cell 20 reaches a bursting pressure.

Referring to FIG. 9, FIG. 11 and FIG. 23, in some embodiments, in the thickness direction of the end cover assembly 21, the plurality of gas discharging holes 247 are evenly distributed within the projection range of the pressure relief mechanism 212 on the support member 24.

The plurality of gas discharging holes 247 are located in the projection of the pressure relief mechanism 212 on the support member 24 in the thickness direction, and the plurality of gas discharging holes 247 are evenly distributed. In other words, the plurality of gas discharging holes 247 do not exceed the region of the support member 24 corresponding to the pressure relief mechanism 212, and the plurality of gas discharging holes 247 are evenly distributed in this region.

The plurality of gas discharging holes 247 are evenly distributed within the projection range of the pressure relief mechanism 212 on the support member 24 in the thickness direction, which is conducive to the smooth flowing of gas in the battery cell 20 to the pressure relief mechanism 212 through the gas discharging holes 212.

Referring to FIG. 9, FIG. 11 and FIG. 23, in some embodiments, the end cover assembly 21 is provided with a first liquid injection hole 214, the support member 24 is provided with a second liquid injection hole 248, and the second liquid injection hole 248 is corresponding to the first liquid injection hole 214 in position.

The first liquid injection hole 214 is a through hole provided in the end cover assembly 21 for liquid injection. For example, the end cover 211 is provided with the first liquid injection hole 214. The second liquid injection hole 248 is a through hole provided in the support member 24 for liquid injection. Optionally, the first liquid injection hole 214 and the second liquid injection hole 248 are provided coaxially.

The first liquid injection hole 214 and the second liquid injection hole 248 are provided, facilitating the liquid injection.

Referring to FIG. 9, FIG. 11 and FIG. 23, in some embodiments, the second liquid injection hole 248 is provided deviating from the center position of the support member 24.

"The second liquid injection hole 248 is provided deviating from the center position of the support member 24" refers to that the second liquid injection hole 248 is not at the center position of the support member 24.

The second liquid injection hole 248 is provided deviating from the center position of the support member 24, such that when the support member 24 is installed to the end cover assembly 21, the second liquid injection hole 248 can play a fool-proofing role, which reduces the risk of incorrect installation to a certain extent.

Embodiments of the present application further provide a battery 100, the battery 100 including a box body 10 and at least one battery cell 20 mentioned above, where the at least one battery cell 20 is accommodated in the box body 10.

In some embodiments, the end cover assembly 21 is provided at one side of the battery cell 20 close to the bottom wall of the box body 10.

The bottom wall of the box body 10 is the wall surface of the box body 10 opposite to the opening end of the box body 10.

By making the end cover assembly 21 provided at one side of the battery cell 20 close to the bottom wall of the box body 10, the battery cell 20 is inverted in the box body 10.

Embodiments of the present application provide an electric device, including at least one battery 100 mentioned above, where the battery 100 is configured to provide electrical energy.

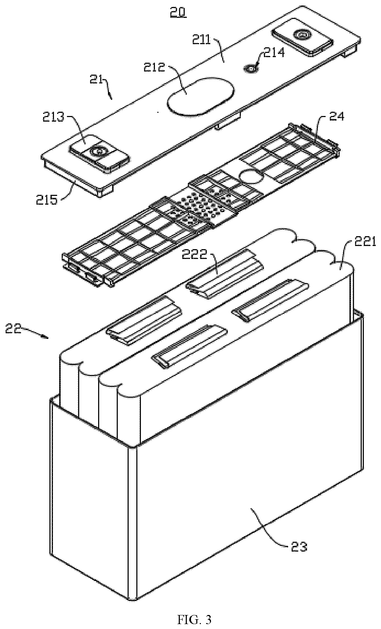

According to some embodiments of the present application, reference is made to FIG. 3 to FIG. 8.

Embodiments of the present application provide a battery cell 20, where the battery cell 20 includes a casing 23, an electrode assembly 22, an end cover assembly 21 and a support member 24. The casing 23 has an opening. The electrode assembly 22 has a main body 221 and tabs 222 protruding from the main body 221. The electrode assembly 22 is accommodated in the casing 23. The end cover assembly 21 covers the opening. The support member 24 is located in the casing 23, and the tabs 222 are bent around the support member 24. The end cover assembly 21 includes an end cover 211 and an insulating member 215. The insulating member 215 is located at one side of the end cover 211 facing the main body 22. In the above, the insulating member 215 includes a first hook part 2151, and the support member 24 includes a second hook part 241. The first hook part 2151 and the second hook part 241 are provided correspondingly and hooked with each other to restrict the movement of the support member 24 in a direction close to the main body 221. The support member 24 abuts against the insulating member 215 in the direction away from the main body 221.

The body part 242 has a first end 240 and a second end 249 opposite to each other, in the first direction, and each of the first end 240 and the second end 249 is provided with the second hook part(s) 241. In the second direction, the first end 240 is provided with a plurality of the second hook parts 241 at intervals, and the second end 249 is provided with a plurality of the second hook parts 241 at intervals, where the distance between the two adjacent second hook parts 241 located at the first end 240 is D1, and the distance between the two adjacent second hook parts 241 located at the second end 249 is D2, satisfying: D1>D2; and any two of the first direction, the second direction and the thickness direction are perpendicular to each other.

The end cover 211 is provided with a pressure relief mechanism 212. The insulating member 215 is provided, at a position thereof corresponding to the pressure relief mechanism 212, with a protrusion portion 2153 protruding in a direction facing the electrode assembly 22, the support member 24 is provided with a groove 246. The protrusion portion 2153 is at least partially accommodated in the groove 246. **In** the thickness direction of the end cover assembly 21, the protrusion portion 2153 abuts against the groove bottom surface of the groove 246.

The battery cell 20 is provided therein with the support member 24, and the tabs 222 are bent around the support member 24, so that in the scenario where cells are inverted, the support member 24 can support the main body 221, enabling that the gravity of the main body 221 is not easy to be transferred to the tabs 222, and thus is not easy to cause tab 222 bifurcating and insertion, and improving the safety of the battery cell 20. **In** addition, the support member 24 is connected to the insulating member 215, so that the support member 24 does not move up and down in the casing 23 and does not drive the tabs 222 bent around the support member 24 to move, which is conducive to maintaining the shapes of the tabs 222 and preventing damage of the tabs 222 when being driven to move. By providing the first hook part 2151 and the second hook part 241, the insulating member 215 is enabled to be hooked with the support member 24, enabling relatively simple and convenient connection, and limiting the movement of the support member 24 in the direction close to the main body 221, i.e., limiting the movement of the tabs 222 bent around the support member 24, in a direction close to the main body 221, and thereby preventing the tabs 222 from being inserted into the main body 221 to cause a short circuit. By making the support member 24 abut against the insulating member 215 in a direction away from the main body 221, the movement of the support member 24 in the direction away from the main body 221 is limited, ensuring that the support member 24 can stably support the main body 221, so that the gravity of the main body 221 is not easy to be transferred to the tabs, and thus is not easy to cause tab 222 bifurcating and insertion.

Each of the first end 240 and the second end 249 of the body part 242 is provided with the second hook parts 241, and correspondingly, the insulating member 215 is correspondingly provided with first hook parts 2151, and the second hook parts 241 at multiple positions are hooked with the first hook parts 2151, facilitating improving the stability of the support member 24 being connected to the insulating member 215, and thereby ensuring that the support member 24 is not easily separated from the insulating member 215, so that the support member 24 does not move up and down in the casing 23, which is helpful to maintain the shapes of the tabs and avoid damage of the tabs when being driven to move. By making the distance between the two adjacent second hook parts 241 located at the first end 240 greater than the distance between the two adjacent second hook parts 241 located at the second end 249, fool-proofing function can be realized when installing the support member 24, preventing the support member 24 from being installed incorrectly.

By providing the protrusion portion 2153 and the groove 246 and making the protrusion portion 2153 accommodated in the groove 246, the protrusion portion 2153 cooperates with the groove 246 to limit the support member 24 so as to prevent the support member 24 from moving in the casing 23. By making the protrusion portion 2153 abut against the groove bottom surface of the groove 246, the movement of the support member 24 in a direction away from the main body 221 is limited, ensuring that the support member 24 can stably support the main body 221, and enabling that the gravity of the main body 221 is not easy to be transferred to the tabs 222, and thus is not easy to cause tab 222 bifurcating and insertion.

The above are only preferred embodiments of the present application, and are not intended to limit the present application. For those skilled in the art, there may be various modifications and changes in the present application. Any modifications, equivalent replacements, improvements, etc. made within the spirits and principles of the present application shall be included within the protection scope of the present application.

## Claims

1. A battery cell, comprising:
a casing, having an opening;
an electrode assembly, having a main body and a tab protruding from the main body, wherein the electrode assembly is accommodated in the casing;
an end cover assembly, covering the opening; and
a support member located in the casing, wherein:
the tab is bent around the support member, and
the support member is connected to the end cover assembly, to fix the support member.

2. The battery cell according to claim 1, wherein the support member is detachably connected with the end cover assembly.

3. The battery cell according to claim 2, wherein the end cover assembly comprises a first hook part, the support member comprises a second hook part, and the first hook part and the second hook part are correspondingly provided and are hooked with each other, to limit movement of the support member in a direction close to the main body.

4. The battery cell according to claim 3, wherein the support member abuts against the end cover assembly in a direction away from the main body.

5. The battery cell according to claim 3 or 4, wherein the support member further comprises a body part, and the tab is bent around the body part; and
the second hook part comprises an extension part and a stopper part, in a thickness direction of the end cover assembly, the extension part extends from the body part in a direction away from the electrode assembly, the stopper part is connected to one end of the extension part away from the electrode assembly, and the stopper part is configured to be hooked with a corresponding first hook part.

6. The battery cell according to claim 5, wherein:
in a first direction, a size of a portion of the stopper part protruding from the extension part is L1, which satisfies: L1>0.6 mm; and
the first direction is perpendicular to the thickness direction.

7. The battery cell according to claim 5, wherein the body part is provided with a through hole; and
wherein:
in the thickness direction, a projection of the stopper part on the body part at least partially falls within the through hole; or
the stopper part protrudes from the extension part in the first direction, the through hole is located at one side of the extension part in a second direction, and any two of the first direction, the second direction and the thickness direction are perpendicular to each other.

8. The battery cell according to claim 5, wherein a first inclined surface is formed at one end of the first hook part facing the main body, a second inclined surface is formed at one end of the stopper part away from the main body, and in the thickness direction, a projection of the first inclined surface on the main body and a projection of the second inclined surface on the main body at least partially overlap.

9. The battery cell according to any one of claims 5 to 8, wherein the body part has a first surface, the extension part is connected to the first surface, the stopper part has a second surface configured for abutting against the first hook part, the second surface faces the first surface in the thickness direction, and a distance between the second surface and the first surface is L2, which satisfies L2>1.5mm.

10. The battery cell according to any one of claims 5 to 9, wherein:
in the first direction, the body part has a first end and a second end opposite to each other, and each of the first end and the second end is provided with the second hook part, and
the first direction is perpendicular to the thickness direction.

11. The battery cell according to claim 10, wherein:
in the second direction, the first end is provided with a plurality of second hook parts at intervals, and the second end is provided with a plurality of second hook parts at intervals, a distance between two adjacent second hook parts located at the first end is D1, and a distance between two adjacent second hook parts located at the second end is D2, satisfying: D1>D2; and
any two of the first direction, the second direction and the thickness direction are perpendicular to each other.

12. The battery cell according to claim 11, wherein it satisfies D1-D2>2mm.

13. The battery cell according to any one of claims 10 to 12, wherein the second hook parts located at the first end and the second hook parts located at the second end are provided back to back or facing each other.

14. The battery cell according to claim 1, wherein the support member is thermally melted or laser welded with the end cover assembly.

15. The battery cell according to any one of claims 1 to 14, wherein:
the end cover assembly comprises an end cover and an insulating member, the insulating member is located at one side of the end cover facing the main body, and the insulating member is configured for insulating and isolating the electrode assembly from the end cover; and
the support member is connected to the insulating member.

16. The battery cell according to claim 15, wherein the end cover is provided with a pressure relief mechanism, the insulating member is provided, at a position thereof corresponding to the pressure relief mechanism, with a protrusion portion protruding in a direction facing the electrode assembly, the support member is provided with a groove, and the protrusion portion is at least partially accommodated in the groove.

17. The battery cell according to claim 16, wherein in a thickness direction of the end cover assembly, the protrusion portion abuts against a groove bottom surface of the groove.

18. The battery cell according to claim 16 or 17, wherein in the thickness direction of the end cover assembly, a depth of the groove is H, which satisfies: H>0.5mm.

19. The battery cell according to any one of claims 16 to 18, wherein a maximum gap between a groove side surface of the groove and an outer peripheral surface of the protrusion portion is D3, which satisfies: 0<D3≤10mm.

20. The battery cell according to any one of claims 1 to 19, wherein the end cover assembly comprises a pressure relief mechanism, and in the thickness direction of the end cover assembly, a plurality of gas discharging holes are provided in a region of the support member corresponding to the pressure relief mechanism.

21. The battery cell according to claim 20, wherein an area of the plurality of gas discharging holes is S1, and an area of the pressure relief mechanism is S2, satisfying S1/S2≥0.5.

22. The battery cell according to claim 20 or 21, wherein in the thickness direction of the end cover assembly, the plurality of gas discharging holes are evenly distributed within a projection range of the pressure relief mechanism on the support member.

23. The battery cell according to any one of claims 1 to 22, wherein the end cover assembly is provided with a first liquid injection hole, the support member is provided with a second liquid injection hole, and the second liquid injection hole is corresponding to the first liquid injection hole in position.

24. The battery cell according to claim 23, wherein the second liquid injection hole is provided deviating from a center position of the support member.

25. A battery, comprising:
a box body;
the battery cell according to any one of claim 1 to 24, accommodated in the box body.

26. The battery according to claim 25, wherein the end cover assembly is provided at one side of the battery cell close to a bottom wall of the box body.

27. An electric device, comprising the battery according to any one of claims 25 to 26, wherein the battery is configured to supply electric energy.
